# EUROPEAN PATENT SPECIFICATION

(11) **EP 3 139 294 B1**
(45) Date of publication and mention of the grant of the patent: **11.12.2019**
(21) Application number: 15834021.6
(22) Date of filing: 05.08.2015
(51) Int. Cl.: G06F 21/44, F24F 11/89

(54) **DEVICE AUTHENTICATION APPARATUS, AIR CONDITIONING SYSTEM, AND DEVICE AUTHENTICATION METHOD**
VORRICHTUNGSAUTHENTIFIZIERUNGSEINRICHTUNG, KLIMATISIERUNGSSYSTEM UND VORRICHTUNGSAUTHENTIFIZIERUNGSVERFAHREN
APPAREIL D'AUTHENTIFICATION DE DISPOSITIF, SYSTÈME DE CLIMATISATION, ET PROCÉDÉ D'AUTHENTIFICATION DE DISPOSITIF

(30) Priority: 22.08.2014 JP 2014169581
(43) Date of publication of application: 08.03.2017
(73) Proprietor: Mitsubishi Heavy Industries, Ltd., Tokyo 108-8215 (JP)
(72) Inventor: MITOMA, Keisuke, Tokyo 108-8215 (JP); ITO, Takahide, Tokyo 108-8215 (JP); ENYA, Atsushi, Tokyo 108-8215 (JP)
(74) Representative: Intès, Didier Gérard André
(86) International application number: PCT/JP2015/072286
(87) International publication number: WO 2016/027678

(56) References cited:
- EP-A2- 2 559 959
- JP-A- 2004 067 306
- JP-A- 2006 078 043
- JP-A- 2006 078 043

## Description

### Technical Field

The present invention relates to a device authentication apparatus, an air conditioning system, and a device authentication method.

### Background Art

As an apparatus in which plural devices are connected to each other through a communication medium, for example, an air conditioning system in which one outdoor unit and plural indoor units are connected to each other through refrigerant pipes and an electric interconnection has been provided.

In such an air conditioning system, PTL 1 discloses a technique that recognizes respective refrigerant specifications, capacity rankings or device types using communication means when supplying power to a device and determines whether an outdoor unit is connectable or not to determine a connection abnormality before starting an operation of the air conditioning system.

In the related art, in mutual communications immediately after an indoor unit and an outdoor unit are connected to each other, as indoor unit specification data, data indicating the form of the indoor unit (for example, a ceiling cassette type four way blow-off, or the like), the capacity of the indoor unit (for example, 7.1 kW), or the like is transmitted from the indoor unit to the outdoor unit.

### Citation List

### Patent Literature

[PTL 1] Japanese Unexamined Patent Application Publication No. 2006-78043 is related to an air conditioner which performs an air conditioning by connecting an indoor unit and an outdoor unit.
[PTL 2] European Patent Application EP2559959 A2 provides an air-conditioning apparatus securing the connection flexibility between the outdoor unit and the indoor unit and, at the same time, improving the safety of inflammable refrigerant and especially preventing an inflammable refrigerant being used for an indoor unit not sufficiently fireproof.

### Summary of Invention

### Technical Problem

However, in the case of an air conditioning system in which an indoor unit manufactured by a different manufacturer is connectable to an outdoor unit, since a different manufacturer has manufactured the indoor unit, there is a case where an inappropriate device is used as a device that forms the indoor unit. In such a case, there is a concern that the indoor unit may have a specification unsuitable for forming the air conditioning system and the outdoor unit connected to the indoor unit may not perform a proper operation.

The invention has been made in consideration of the above-mentioned problems, and an object thereof is to provide a device authentication apparatus, an air conditioning system, and a device authentication method capable of excluding a device having an inappropriate specification from the system.

### Solution to Problem

In order to solve the above-mentioned problems, a device authentication apparatus, an air conditioning system, and a device authentication method of the invention employ the following means.

According to a first aspect of the invention, there is provided a device authentication apparatus according to claim 1 is provided.

According to this configuration, the plural apparatuses are connected to each other through the communication medium to form the system. The system is an air conditioning system, for example, and the apparatus is an indoor unit or and an outdoor unit.

As a device that forms the apparatus, an inappropriate device may be used. In a case where the apparatus is an indoor unit, the device is an expansion valve, a heat exchanger, or the like.

In this regard, according to this configuration, the usable apparatus information is stored in the storage means. The usable apparatus information refers to information indicating a specification usable for the apparatus. In other words, the usable apparatus information is information of an apparatus suitable for forming the system, and an apparatus having a specification which is not indicated by the usable apparatus information is not suitable for forming the system.

On the other hand, the apparatus stores apparatus specification information which is information indicating a specification thereof. The apparatus specification information is stored in storage means provided in the apparatus when assembling the apparatus, for example.

In this regard, according to this configuration, authentication is performed by the authentication means using the apparatus specification information and the usable apparatus information. The authentication means determines, in a case where the apparatus specification information transmitted from the apparatus matches the usable apparatus information stored in the storage means, that authentication with respect to the apparatus that has transmitted the apparatus specification information is successful. That is, in a case where the apparatus is suitable for the system, the authentication of the apparatus is successful. On the other hand, in a case where the apparatus is not suitable for the system, the authentication of the apparatus fails. Although the apparatus for which the authentication fails may be connected to the communication medium, for example, its operation is not performed.

In this way, according to this configuration, by using information indicating a specification of an apparatus for authentication of the apparatus, it is possible to exclude an apparatus having an inappropriate specification from the system.

In the first aspect of the invention, the usable information may be information indicating specifications of devices which are usable to form the apparatus, and the apparatus specification information may be information indicating specifications of devices that form the apparatus.

According to this configuration, by using information indicating specifications of devices that form an apparatus for authentication of the apparatus, it is possible to easily exclude an apparatus having an inappropriate specification from the system.

In the first aspect of the invention, the usable information may be information indicating a type of a usable apparatus, and the apparatus specification apparatus.

According to this configuration, by using information indicating a type of an apparatus for authentication of the apparatus, it is possible to easily exclude an apparatus having an inappropriate specification from the system.

According to a second aspect of the invention, there is provided an air conditioning system including: the device authentication apparatus described above, in which the apparatus is an indoor unit or an outdoor unit.

According to this configuration, even when an indoor unit or an outdoor unit is manufactured by a different manufacturer, since a specification thereof is accurately recognized, it is possible to transmit a control signal suitable for the specification to the indoor unit or the outdoor unit.

In a third aspect of the invention, there is provided a device authentication method according to claim 3 is provided.

### Advantageous Effects of Invention

According to the invention, it is possible to achieve an excellent effect capable of excluding an apparatus having an inappropriate specification from a system.

The invention is defined by the independent claims.

### Brief Description of Drawings

Fig. 1 is a diagram illustrating a refrigerant system of an air conditioning system according to an embodiment of the invention.
Fig. 2 is a diagram illustrating an electrical configuration of the air conditioning system according to the embodiment of the invention.
Fig. 3 is a functional block diagram relating to indoor unit authentication in a control apparatus according to the embodiment of the invention.
Fig. 4 is a flowchart illustrating a flow of an indoor unit authentication process according to the embodiment of the invention.

### Description of Embodiments

Hereinafter, embodiments of a device authentication apparatus, an air conditioning system, and a device authentication method according to the invention will be described with reference to the accompanying drawings.

### [First embodiment]

Hereinafter, a first embodiment of the invention will be described.

In the first embodiment, an air conditioning system will be described as an example of a system in which plural apparatuses are connected to each other through a communication medium. That is, the apparatuses refer to an indoor unit and an outdoor unit that form the air conditioning system.

Further, the air conditioning system according to the first embodiment is provided in a large commercial facility, a building, or the like, for example.

Hereinafter, the air conditioning system according to an embodiment of the invention and a control method thereof will be described with reference to the accompanying drawings.

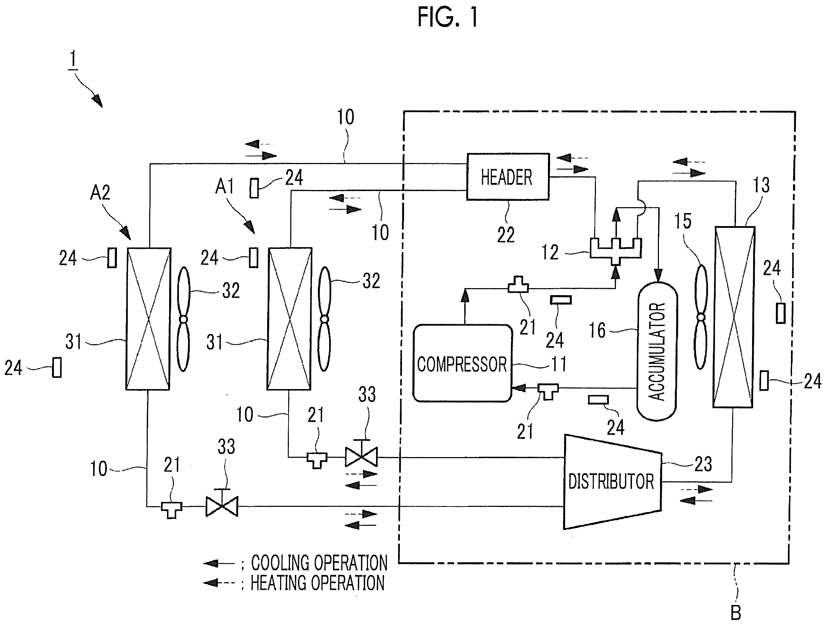

Fig. 1 is a diagram illustrating a refrigerant system of an air conditioning system 1 according to this embodiment. As shown in Fig. 1, the air conditioning system 1 includes one outdoor unit B, and plural indoor units A1 and A2 connected to the outdoor unit B through a common refrigerant pipe 10. In Fig. 1, for ease of description, a configuration in which two indoor units A1 and A2 are connected to one outdoor unit B is shown, but the number of installed outdoor units and the number of connected indoor units are not particularly limited.

The outdoor unit B includes, for example, a compressor 11 that compresses a refrigerant for transmission, a four-way valve 12 that switches a circulation direction of the refrigerant, an outdoor heat exchanger 13 that performs heat exchange between the refrigerant and outside air, an outdoor fan 15, an accumulator 16 provided in a suction side pipe of the compressor 11 to perform gas-liquid separation from the refrigerant, and the like.

Each of the indoor units A1 and A2 includes an indoor heat exchanger 31, an indoor fan 32, an electronic expansion valve 33, and the like. Each of two indoor units A1 and A2 is connected to each refrigerant pipe 10 branched from a header 22 and a distributor 23 in the outdoor unit B.

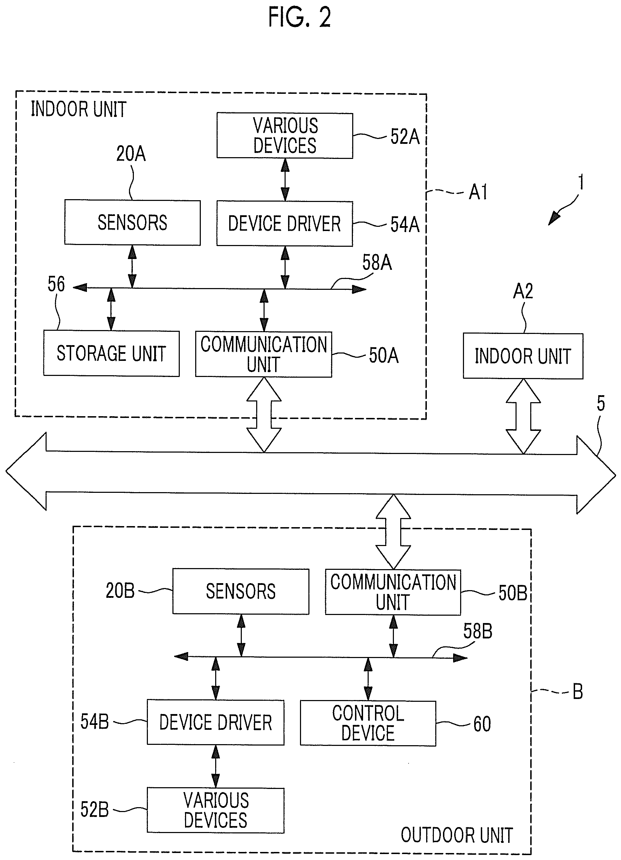

Various sensors 20A and 20B (see Fig. 2) such as a pressure sensor 21 that measures a refrigerant pressure and a temperature sensor 24 that measures a temperature of the refrigerant or the like are provided in the indoor units A1 and A2 and the outdoor unit B.

As an example, the indoor units A1 and A2 may be manufactured by a manufacturer different from that of the outdoor unit B as long as they satisfy their functions.

Fig. 2 is a diagram illustrating an electrical configuration of the air conditioning system 1 according to the first embodiment. As shown in Fig. 2, a configuration in which the indoor units A1 and A2, and the outdoor unit B are connected to each other through a common bus 5 and information exchange is possible therebetween is used.

The common bus 5 is an example of a communication medium, and communication may be performed in a wireless or wired manner. A maintenance and inspection apparatus that performs maintenance and inspection is connected to the common bus 5, and is configured to periodically transmit working data or to rapidly notify, when an abnormality occurs, information indicating that the abnormality occurs.

Here, the indoor units A1 and A2 have a configuration in which a communication unit 50A that performs transmission and reception of information with respect to the outdoor unit B through the common bus 5, a device driver 54A that drives various devices 52A that form the indoor units A1 and A2, the sensors 20A provided in the indoor units A1 and A2, and a storage unit 56 that stores a variety of information relating to the indoor units A1 and A2 are connected to each other through a bus 58A, and information exchange is possible. Although not shown, the indoor unit A2 also has the same configuration as that of the indoor unit A1.

Further, the various devices 52A correspond to the indoor heat exchanger 31, the indoor fan 32, the indoor unit expansion valve 33, and the like described above.

An address storage area, an indoor unit information storage area, and an apparatus specification information storage area are provided in the storage unit 56 provided in the indoor units A1 and A2.

The address storage area refers to a storage area for storing an address (hereinafter, referred to as an "indoor unit address") which is a unique identification number allocated for communication with the outdoor unit B.

The indoor unit information storage area refers to a storage area for storing information indicating its own model data. For example, indoor unit information such as an indoor unit capacity, mounted sensors (for example, a temperature sensor, a pressure sensor, and the like), or an indoor unit type (for example, a ceiling cassette type 4-way blow-off, or the like) is stored therein.

The apparatus specification information storage area refers to a storage area for storing apparatus specification information which is information indicating its own specification.

Apparatus specification information relating to the first embodiment refers to information indicating specifications of the various devices 52A that form the indoor units A1 and A2, and for example, includes a specification (for example, the number of pulses from a fully opened state to a fully closed state (maximum and minimum numbers of pulses), a bore diameter, or the like) of the indoor unit expansion valve 33, a specification (for example, the number of columns, the number of steps, and a heat exchange width) of the indoor heat exchanger 31, or the like.

The indoor unit addresses are set when the indoor units A1 and A2 and the outdoor unit B are connected to each other through the common bus 5, and are stored in the storage unit 56. On the other hand, the indoor unit information and the apparatus specification information are stored in a predetermined format in the storage unit 56 when the indoor units A1 and A2 are assembled, for example.

The outdoor unit B has a configuration in which a communication unit 50B that performs transmission and reception of information with respect to the indoor units A1 and A2 through the common bus 5, a device driver 54B that drives various devices 52B that form the outdoor unit B, sensors 20B provided in the outdoor unit B, and a control apparatus 60 that generally controls the air conditioning system 1 are connected to each other through a bus 58B and information exchange is possible.

The various devices 52B correspond to the compressor 11, the four-way valve 12, the outdoor fan 13, and the like described above.

The control apparatus 60 includes a central processing unit (CPU), a random access memory (RAM), a read only memory (ROM), a computer-readable storage medium, and the like, for example. Further, a series of processes for realizing various functions is stored on a storage medium or the like in the form of a program, for example, and the CPU reads the program into the RAM or the like to execute information processing and calculation operations, to thereby realize the various functions. The program may be installed in advance in the ROM or another storage medium, may be provided in a state of being stored on a computer-readable storage medium, or may be distributed through communication means in a wired manner or a wireless manner, for example. The computer-readable storage medium refers to a magnetic disc, a magnetooptical disc, a CD-ROM, a DVD-ROM, a semiconductor memory, or the like.

In such an air conditioning system 1, for example, the control apparatus 60 acquires measurement data or control information from the sensors 20A and 20B, and the device drivers 54A and 54B through the common bus 5.

Further, the control apparatus 60 executes a predetermined control program based on the acquired measurement data and control information, and outputs control commands to the various devices 52A provided in the indoor units A1 and A2. The control commands are transmitted to the device driver 54A through the common bus 5, the communication unit 50A, and the bus 58A. The device driver 54A drives each corresponding device among the various devices 52A based on the received control commands. Thus, control of the indoor units A1 and A2 based on the control commands is realized.

Similarly, the control apparatus 60 executes a predetermined control program based on the acquired measurement data and control information, and outputs control commands to the various devices 52B provided in the outdoor unit B. The control commands are transmitted to the device driver 54B through the bus 58B. The device driver 54B drives each corresponding device among the various devices 52B based on the received control commands. Thus, control of the outdoor unit B based on the control commands is realized.

Here, in the case of the air conditioning system 1 in which the indoor units A1 and A2 manufactured by a different manufacturer are connectable to the outdoor unit B, since the different manufacturer manufactures the indoor units A1 and A2, an inappropriate device may be used as the various devices 52A that form the indoor units A1 and A2. In such a case, the outdoor unit B connected to the indoor units A1 and A2 may not perform a normal operation.

Thus, the control apparatus 60 stores usable apparatus information which is information indicating specifications usable for the indoor units A1 and A2, and performs authentication of the indoor units A1 and A2 using the usable apparatus information.

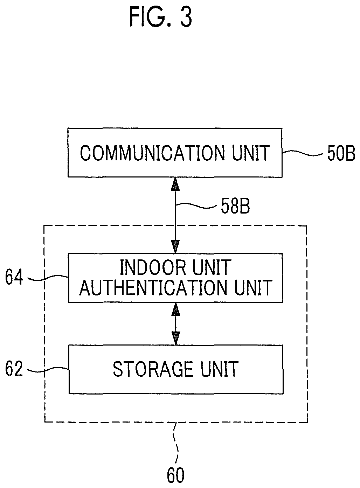

Fig. 3 is a functional block diagram relating to indoor unit authentication in the control apparatus 60 according to the first embodiment. In the following description, in a case where the indoor units A1 and A2 are distinguished from each other, "1" or "2" is added to the end of reference sign "A", and in a case where the indoor units A1 and A2 are not distinguished from each other, "1" or "2" is not added thereto.

As shown in Fig. 3, the control apparatus 60 includes a storage unit 62, and an indoor unit authentication unit 64.

The storage unit 62 stores usable apparatus information. The usable apparatus information refers to information about the indoor unit A which is suitable for forming the air conditioning system 1, and thus, an indoor unit A having a specification which is not indicated by the usable apparatus information is not suitable for forming the air conditioning system 1.

The usable apparatus information represents a specification (for example, maximum and minimum numbers of pulses, a bore diameter, or the like) of the indoor unit expansion valve 33 which is usable, a specification (for example, the number of columns, the number of steps, and a heat exchange width) of the indoor heat exchanger 31 which is usable, or the like.

The indoor unit authentication unit 64 compares apparatus specification information transmitted from the indoor unit A through the common bus 5 with usable apparatus information to perform authentication of the indoor unit A that has transmitted the apparatus specification information.

Specifically, in a case where the apparatus specification information transmitted from the indoor unit A matches the usable apparatus information, the indoor unit authentication unit 64 determines that authentication with respect to the indoor unit A that has transmitted the apparatus specification information is successful. That is, in a case where the indoor unit A is appropriate for the air conditioning system 1, the authentication of the indoor unit A is successful. On the other hand, in a case where the indoor unit A is inappropriate for the air conditioning system 1, the authentication of the indoor unit A fails.

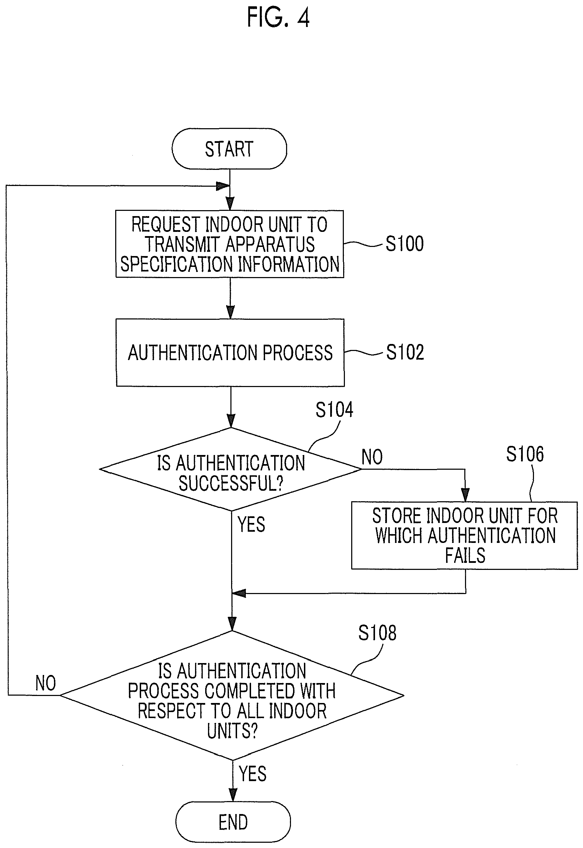

Fig. 4 is a flowchart illustrating a flow of an indoor unit authentication process executed by the control apparatus 60 provided in the outdoor unit B according to the first embodiment.

The indoor unit authentication process is executed before the indoor unit A and the outdoor unit B are connected to the common bus 5 and a trial run is performed. It is assumed that before the indoor unit authentication process is executed, an indoor unit address is set in advance.

First, in step 100, requirement information for requiring transmission of apparatus specification information is transmitted to the indoor unit A through the common bus 5. If the requirement information is received, the indoor unit A reads apparatus specification information stored in the storage unit 56 and transmits the result to the control apparatus 60.

The indoor unit A transmits indoor unit information in addition to the apparatus specification information to the outdoor unit B. The indoor unit information is used for generating control information to be transmitted to the indoor unit A by the control apparatus 60.

In step 102, authentication using the received apparatus specification information and usable apparatus information read from the storage unit 62 is performed by the indoor unit authentication unit 64.

In next step 104, it is determined whether the authentication based on the received apparatus specification information is successful. In a case where the determination is affirmative, the procedure proceeds to step 108, and in a case where the determination is negative, the procedure proceeds to step 106.

In step 106, information (for example, an indoor unit address) for specifying the indoor unit A that has transmitted the apparatus specification information for which the authentication fails is stored in the storage unit 62, and then, the procedure proceeds to step 108. The indoor unit A for which the authentication fails is displayed on a monitor (not shown) after the indoor unit authentication process is terminated, for example.

In step 108, it is determined whether the authentication is performed with respect to all indoor units A connected through the common bus 5. In a case where the determination is affirmative, the indoor unit authentication process is terminated. Further, in a case where the determination is negative, the procedure returns to step 100, and then, requirement information for requiring transmission of apparatus specification information is transmitted to the next indoor unit A.

Further, the control apparatus 60 transmits control information for operating the indoor unit A to only the indoor unit A for which the authentication using the indoor unit authentication unit 64 is successful. On the other hand, even if the indoor unit A for which the authentication fails is connected to the common bus 5, for example, control information is not transmitted thereto from the control apparatus 60, and its operation is not performed.

Here, if the indoor unit A is manufactured by the same manufacturer as that of the control apparatus 60, since the specification of the indoor unit A is clear, it is not necessary to perform the indoor unit authentication process. However, in a case where the indoor unit A manufactured by a different manufacturer is used for the air conditioning system 1, there is a case where the specification of the indoor unit A is not clear.

Thus, even if the indoor unit A is manufactured by the different manufacturer, by performing the indoor unit authentication process, the control apparatus 60 can accurately recognize the specification of the indoor unit A, and thus, it is possible to transmit control signals suitable for specifications of various devices 20A, that is, characteristics of the indoor unit A to the indoor unit A.

Further, the various devices 20A have solid variations in their respective solids (hereinafter, referred to "solid variations"). Thus, in order to transmit an appropriate control signal to the indoor unit A, it is necessary to perform normalization for absorbing solid variations.

Particularly, with respect to the indoor unit expansion valve 33, an initial opening degree is instructed at the start of a cooling operation, or a minute opening degree for preventing inflow of a refrigerant during stoppage in a heating operation is set. However, if the above-mentioned solid variations are present, it is difficult to set a proper opening degree.

Thus, if the indoor unit authentication process is terminated, the control apparatus 60 according to the first embodiment performs the following process as a valve opening pulse setting process of the indoor unit expansion valve 33 provided in the indoor unit A for which the authentication is successful.

First, in a case where the indoor unit A is cooling-operated and a valve opening pulse of the indoor unit expansion valve 33 of the indoor unit A is not set, an opening degree command pulse is set to a "0" pulse, and then, the opening degree command pulse of the indoor unit expansion valve 33 is increased by a predetermined pulse at a predetermined time interval while detecting the temperature of the indoor heat exchanger 31 of the indoor unit A. If the temperature of the indoor heat exchanger drops by a predetermined temperature difference or greater, an opening degree command pulse value at that time is stored as the valve opening pulse of the indoor unit expansion valve 33 in the indoor unit A.

According to this process, for example, when performing a trial run in installation, or when performing an initial cooling operation, by executing a valve opening pulse setting operation of searching for the valve opening pulse of the indoor unit expansion valve 33 provided in each indoor unit A only one time and storing the search result, it is possible to instruct and set an initial opening degree or the like with reference to the valve opening pulse thereafter. The setting of the valve opening pulse may be performed by setting the opening degree command pulse to a "0" pulse with respect to the indoor unit expansion valve 33 for which a valve opening pulse is not set, and then, by increasing the opening degree command pulse of the indoor unit expansion valve 33 by a predetermined pulse at a predetermined time interval while detecting the temperature of the indoor heat exchanger 31, determining, if the temperature of the indoor heat exchanger 31 drops by a predetermined temperature difference or greater, that the indoor unit expansion valve 33 is opened so that a refrigerant flows, and storing an opening degree command pulse value at that time as the valve opening pulse of the indoor unit expansion valve 33. Thus, it is possible to absorb solid variations of the indoor unit expansion valve 33, and to set an appropriate opening degree based on a valve opening pulse used for setting an initial opening degree or the like.

According to the above-described valve opening pulse setting process, it is possible to handle variations in operation performance due to solid variations of the indoor unit expansion valve 33 in an improved manner, and thus, it is possible to optimize the control of the indoor unit A.

In addition to the valve opening pulse setting process, a process of treating solid variations of the various devices 52A in an improved manner may be performed.

As described above, the control apparatus 60 according to the first embodiment performs authentication of the plural indoor units A connected through the common bus 5 so as to form the air conditioning system 1.

Each indoor unit A stores apparatus specification information which is information indicating a specification of the indoor unit A.

Further, the control apparatus 60 stores usable apparatus information which is information indicating a specification usable for the indoor unit A, and in a case where the apparatus specification information transmitted from the indoor unit A matches the usable apparatus information, the control apparatus 60 determines that authentication with respect to the indoor unit A that has transmitted the apparatus specification information is successful.

In this way, the control apparatus 60 uses information indicating the specification of the indoor unit A for authentication of the indoor unit A, to thereby make it possible to exclude an indoor unit A having an inappropriate specification from the air conditioning system 1.

### [Second embodiment]

Hereinafter, a second embodiment of the invention will be described.

Since a configuration of an air conditioning system 1 according to the second embodiment and a flow of an indoor unit authentication process are the same as in the air conditioning system 1 according to the first embodiment, its description will not be repeated.

In the air conditioning system 1 according to the second embodiment, apparatus specification information stored in an indoor unit A is used as information indicating a type of the indoor unit A, and usable apparatus information stored in a control apparatus 60 is used as information indicating a type of a usable indoor unit A.

In the second embodiment, as an example, a type of an indoor unit A of a different manufacturer, which is connectable in the air conditioning system 1, is stored as usable apparatus information. The type indicated by the usable apparatus information may be plural.

Further, the control apparatus 60 stores type specification information indicating a specification of an indoor unit A (specifications of various devices 20A that form the indoor unit A) corresponding to a type indicated by usable apparatus information in a storage unit 62.

Further, in the indoor unit authentication process according to the second embodiment, it is determined whether a type indicated by apparatus specification information transmitted from an indoor unit A is included in usable apparatus information stored in the control apparatus 60. If the determination is affirmative, it is determined that authentication is successful, and if the determination is negative, it is determined that the authentication fails.

If the authentication is successful, the control apparatus 60 reads the specification of the type indicated by the apparatus specification information from type specification information, and performs a process for treating solid variations of the various devices 52A in an improved manner based on the read specification (specifications of the various devices 20A that form the indoor unit A).

Hereinbefore, the invention has been described with reference to the above-mentioned embodiments, but a technical scope of the invention is not limited to the scopes disclosed in the above-described embodiments. Various modifications or improvements may be added to the above-described embodiments in a range without departing from the concept of the invention, and embodiments based on the modifications or improvements are also included in the technical scope of the invention. Further, the above-mentioned embodiments may be appropriately combined with each other.

For example, in the above-mentioned embodiments, a configuration in which a system in which plural apparatuses are connected to each other through a communication medium is used as the air conditioning system 1 is shown, but the invention is not limited thereto, and a configuration in which the system is used as another system may be used.

As another system, for example, a system in which a battery type forklift that is operated in a storeroom managed by an automatic system is used as the above-described apparatus, a system in which a machine tool in a line managed in a factory is used as the above-described apparatus, a system in which plural heat source devices (electric turbo chillers) managed in a district air conditioning facility or a factory are used as the above-described apparatuses, a wind farm in which plural wind power generation apparatuses are used as the above-described apparatuses, or a system in which plural lithium batteries are provided and a battery management unit (BMU) of each lithium battery is used as the above-described apparatus, or the like.

Further, in the above-described embodiments, a configuration in which the control apparatus 60 is provided in the indoor unit B and the indoor unit authentication process is executed by the control apparatus 60 is shown, but the invention is not limited thereto. For example, a configuration in which the control apparatus 60 is directly connected to the common bus 5 as a separately installed controller to control the indoor unit A and the outdoor unit B and to execute the indoor unit authentication process may be used.

In such a case, the control apparatus 60 includes an outdoor unit control unit that is provided independently of the outdoor unit B and an indoor unit control unit that is provided independently of the indoor unit A. Further, the outdoor unit control unit and the indoor unit control unit are able to perform bidirectional communication, in which the outdoor unit control unit outputs control commands to the various devices 52B mounted in the outdoor unit B, and the indoor unit control unit outputs control commands to the various devices 20A mounted in the indoor unit A.

According to the air conditioning system 1 of such a type, since the indoor unit control unit and the outdoor unit control unit are provided independently of the indoor unit A and the outdoor unit B, it is possible to simplify the configurations of the indoor unit A and the outdoor unit B, to thereby reduce the cost. Further, it is not necessary to mount a highly accurate program in the indoor unit A and the outdoor unit B (for example, only communication and component actuator functions are mounted), and thus, it is possible to easily perform exchange of the outdoor unit B and the indoor unit A without obsolescence of devices. Furthermore, since the indoor unit control unit and the outdoor unit control unit are provided independently of the indoor unit A and the outdoor unit B, for example, by placing the indoor unit control unit and the outdoor unit control unit under the control of a manufacturer of the air conditioning system 1, it is possible to easily perform an operation such as updating relating to a program, for example.

In addition, in the case of this configuration, the same authentication process as in the indoor unit A may be performed with respect to the outdoor unit B using the control apparatus 60. For example, specifications of the various devices 52B that form the outdoor unit B, used for authentication are specifications of the compressor 11, the four-way valve 12, the outdoor fan 13, and the like. Furthermore, as in the second embodiment, the authentication may be performed according to a type of the outdoor unit B.

Further, the flow of the indoor unit authentication process described in the above-described embodiments is exemplary, and thus, deletion of an unnecessary step, addition of a new step, or change of the processing orders may be performed in a range without departing from the concept of the invention.

### Reference Signs List

- 1: air conditioning system
- 5: common bus
- 60: control apparatus
- 62: storage unit
- 64: indoor unit authentication unit
- A: indoor unit
- B: outdoor unit

## Claims

1. A device authentication apparatus that performs authentication of a plurality of apparatuses that are connected to each other through a communication medium to form a system, comprising:
storage means (56) for storing usable apparatus information which is information indicating specifications of devices which are usable to form each apparatus; and
authentication means (64) configured to determine, when apparatus specification information, which is information indicating specifications of devices that form each apparatus transmitted from the apparatus, matches the usable apparatus information stored in the storage means (56), that authentication with respect to the apparatus that has transmitted the apparatus specification information is successful, **characterized in that**
the specifications of the devices include one of maximum and minimum numbers of pulses of an expansion valve, a bore diameter of the expansion valve, the number of columns of a heat exchanger, the number of steps of the heat exchanger, and a heat exchange width of the heat exchanger.

2. An air conditioning system comprising:
the device authentication apparatus according to claim 1,
wherein the apparatus is an indoor unit (A) or an outdoor unit (B).

3. A device authentication method for performing authentication of a plurality of apparatuses that are connected to each other through a communication medium to form a system, comprising:
receiving apparatus specification information which is information indicating specifications of devices which are usable to form each apparatus from the apparatus;
performing authentication using usable apparatus information which is information indicating specifications of devices that form each apparatus and the apparatus specification information; and
determining, when the apparatus specification information matches the usable apparatus information, that authentication with respect to the apparatus that has transmitted the apparatus specification information is successful,
**characterised in that** the specifications of the devices include one of maximum and minimum numbers of pulses of an expansion valve, a bore diameter of the expansion valve, the number of columns of a heat exchanger, the number of steps of the heat exchanger, and a heat exchange width of the heat exchanger.

## Patentansprüche

1. Vorrichtungsauthentifizierungseinrichtung, die eine Authentifizierung einer Vielzahl von Einrichtungen, die über ein Kommunikationsmedium miteinander verbunden sind, um ein System zu bilden, durchführt und Folgendes umfasst:
ein Speichermittel (56) zum Speichern von nutzbaren Einrichtungsinformationen, bei denen es sich um Informationen handelt, die Spezifikationen von Vorrichtungen anzeigen, die zum Bilden jeder Einrichtung nutzbar sind; und
ein Authentifizierungsmittel (64), das dazu ausgelegt ist, wenn Einrichtungsspezifikationsinformationen, bei denen es sich um Informationen handelt, die Spezifikationen von Vorrichtungen anzeigen, die jede Einrichtung bilden, und die von der Einrichtung übertragen wurden, mit den nutzbaren Einrichtungsinformationen, die im Speichermittel (56) gespeichert sind, übereinstimmen, zu bestimmen, dass die Authentifizierung mit Bezug auf die Einrichtung, die die Einrichtungsspezifikationsinformationen übertragen hat, erfolgreich war, **dadurch gekennzeichnet, dass**
die Spezifikationen der Vorrichtungen eines von einer maximalen und einer minimalen Anzahl von Impulsen eines Expansionsventils, einen Bohrungsdurchmesser des Expansionsventils, die Anzahl von Kolonnen eines Wärmetauschers, die Anzahl von Stufen des Wärmetauschers und eine Wärmetauschbreite des Wärmetauschers beinhalten.

2. Klimatisierungssystem, das Folgendes umfasst:
die Vorrichtungsauthentifizierungseinrichtung nach Anspruch 1,
wobei die Einrichtung eine Innenraumeinheit (A) oder eine Außeneinheit (B) ist.

3. Vorrichtungsauthentifizierungsverfahren zum Durchführen einer Authentifizierung einer Vielzahl von Einrichtungen, die über ein Kommunikationsmedium miteinander verbunden sind, um ein System zu bilden, Folgendes umfassend:
Empfangen von Einrichtungsspezifikationsinformationen, bei denen es sich um Informationen handelt, die Spezifikationen von Vorrichtungen anzeigen, die zum Bilden jeder Einrichtung nutzbar sind, von der Einrichtung;
Durchführen einer Authentifizierung unter Verwendung von nutzbaren Einrichtungsinformationen, bei denen es sich um Informationen handelt, die Spezifikationen von Vorrichtungen anzeigen, die jede Einrichtung bilden, und der Einrichtungsspezifikationsinformationen und
Bestimmen, wenn die Einrichtungsspezifikationsinformationen mit den nutzbaren Einrichtungsinformationen übereinstimmen, dass die Authentifizierung mit Bezug auf die Einrichtung, die die Einrichtungsspezifikationsinformationen übertragen hat, erfolgreich war, **dadurch gekennzeichnet, dass**
die Spezifikationen der Vorrichtungen eines von einer maximalen und einer minimalen Anzahl von Impulsen eines Expansionsventils, einen Bohrungsdurchmesser des Expansionsventils, die Anzahl von Kolonnen eines Wärmetauschers, die Anzahl von Stufen des Wärmetauschers und eine Wärmetauschbreite des Wärmetauschers beinhalten.

## Revendications

1. Appareil d'authentification de dispositif qui réalise l'authentification d'une pluralité d'appareils qui sont connectés les uns aux autres par l'intermédiaire d'un support de communication pour former un système, comprenant :
des moyens de stockage (56) pour stocker des informations d'appareil utilisables qui sont des informations indiquant des spécifications de dispositifs qui sont utilisables pour former chaque appareil ; et
des moyens d'authentification (64) configurés pour déterminer, lorsque des informations de spécification d'appareil, qui sont des informations indiquant des spécifications de dispositifs qui forment chaque appareil transmis à partir de l'appareil, correspondent aux informations d'appareil utilisables stockées dans les moyens de stockage (56), que l'authentification par rapport à l'appareil qui a transmis les informations de spécification d'appareil est réussie, **caractérisé en ce que**
les spécifications des dispositifs incluent l'un parmi les nombres maximaux et minimaux d'impulsions d'un détendeur, un diamètre d'alésage du détendeur, le nombre de colonnes d'un échangeur de chaleur, le nombre d'étages de l'échangeur de chaleur et une largeur d'échange de chaleur de l'échangeur de chaleur.

2. Système de climatisation comprenant :
l'appareil d'authentification de dispositif selon la revendication 1,
dans lequel l'appareil est une unité intérieure (A) ou une unité extérieure (B).

3. Procédé d'authentification de dispositif pour la réalisation de l'authentification d'une pluralité d'appareils qui sont connectés les uns aux autres par l'intermédiaire d'un support de communication pour former un système, comprenant :
la réception d'informations de spécification d'appareil qui sont des informations indiquant des spécifications de dispositifs qui sont utilisables pour former chaque appareil à partir de l'appareil ;
la réalisation de l'authentification à l'aide d'informations d'appareil utilisables qui sont des informations indiquant des spécifications de dispositifs qui forment chaque appareil et des informations de spécification d'appareil ; et
la détermination, lorsque les informations de spécification d'appareil correspondent aux informations d'appareil utilisables, que l'authentification par rapport à l'appareil qui a transmis les informations de spécification d'appareil est réussie, **caractérisé en ce que**
les spécifications des dispositifs incluent l'un parmi les nombres maximaux et minimaux d'impulsions d'un détendeur, un diamètre d'alésage du détendeur, le nombre de colonnes d'un échangeur de chaleur, le nombre d'étages de l'échangeur de chaleur et une largeur d'échange de chaleur de l'échangeur de chaleur.
